# EUROPÄISCHE PATENTSCHRIFT

(11) **EP 0 515 908 B1**
(45) Veröffentlichungstag und Bekanntmachung des Hinweises auf die Patenterteilung: **14.06.1995**
(21) Anmeldenummer: 92108076.8
(22) Anmeldetag: 13.05.1992
(51) Int. Cl.: A01D 34/67, A01G 3/06

(54) **Schneidkopf für einen Fadenschneider**
Cutting head for filament type vegetation trimmer
Tête de coupe pour tondeuse du type à corder

(30) Priorität: 27.05.1991 DE 4117339
(43) Veröffentlichungstag der Anmeldung: 02.12.1992
(73) Patentinhaber: WOLF-Geräte GmbH Vertriebsgesellschaft KG, D-57518 Betzdorf (DE)
(72) Erfinder: Orthey, Gebhard, W-5241 Nauroth (DE)
(74) Vertreter: Koch, Günther, Dipl.-Ing.

(56) Entgegenhaltungen:
- EP-A- 0 426 039
- DE-A- 2 619 344
- DE-A- 2 728 338
- DE-A- 3 005 968
- DE-A- 3 413 366
- FR-A- 2 596 239
- GB-A- 2 155 299
- US-A- 4 259 782

## Beschreibung

Die Erfindung bezieht sich auf einen Fadenschneider mit einem Motor und einem von der Motorwelle angetriebenen Schneidkopf, der ein auf die Motorwelle drehfest aufgesetztes Gehäuse, einen im Gehäuse angeordneten, mit der Fadenspule kuppelbaren Spulenträger für die Fadenspule, deren Schneidfaden durch eine radiale Führungsöse aus dem Gehäuse herausgeführt ist, und einen abnehmbaren Gehäusedeckel aufweist, durch dessen Mittelöffnung der Spulenträger zwecks Entkupplung der Fadenspule zugänglich ist.

Ein solcher Fadenschneider ist aus der DE 34 13 336 C2 bekannt. Dieser arbeitet in zuverlässiger Weise, wobei durch eine sinnvolle Kupplungsmechanik eine Fadennachstellung dadurch bewirkt werden kann, daß der Fadenschneidermotor an- bzw. abgeschaltet wird. Die Schaltmechanik weist Zentrifugalgewichte in Gestalt von Kugeln auf, die durch radiales Anheben des Spulenträgers die wiederholte Kupplung bzw. Entkupplung und Weiterschaltung um einen Winkelbetrag bewirken.

Ein ähnlicher Fadenschneider, bei dem die Verbindung einzelner Bauteile durch Verrastung der im wesentlichen aus Kunststoff bestehenden Teile erfolgt, ist in der EP-A-04 26 039 beschrieben, welche Druckschrift alle Merkmale des Oberbegriffes des Anspruchs 1 zeigt.

Der vorliegenden Erfindung liegt die Aufgabe zugrunde, einen gattungsgemäßen Fadenschneider so auszubilden, daß die Einzelteile leichter und besser montierbar sind, wobei durch eine sinnvolle Verrastung der einzelnen Teile eine schnelle Montage gewährleistet wird, ohne daß die Funktionsfähigkeit des Schneidkopfes in irgendeiner Weise darunter leidet und mit möglichst wenigen Teilen die Anwendung auf Einfaden- und Zweifadentechnik ausgedehnt werden kann. Gemäß der Erfindung wird die gestellte Aufgabe gelöst durch die im Kennzeichnungsteil des Patentanspruchs 1 angegebenen Merkmale.

Während beim Stand der Technik, wie er aus der DE-C2-3413336 bekannt ist, ein Stift durch die Nabe des Spulengehäuses und durch die Motorwelle getrieben wurde, was eine sehr schwierige Montage erforderte, oder bei der EP-A-0426033 ein Gewinde benutzt wurde, wird gemäß der Erfindung vorgesehen, eine Hohlnabe des Gehäuses über eine Ringnut und einen Hinterschnitt auf der Motorwelle festzurasten, wobei ein in der Motorwelle bereits vormontierter Querstift mit seinen vorstehenden Enden in Gabelarme des Gehäuses eingreift, wodurch die Drehmomentübertragung gewährleistet wird.

Nach einer weiteren Ausgestaltung der Erfindung werden auch die einzelnen Gehäuseteile, insbesondere der Spulenträger in Gestalt der Rastbuchse mit der hiermit zusammenwirkenden Kugelführungsbuchse auf das Gehäuse mittels Verrasthaken aufgerastet, die im gleichen Winkelabstand über den Umfang verteilt sind. Die dem Kunststoff eigene Elastizität gewährleistet einen sicheren Zusammenhalt, wobei jedoch erforderlichenfalls leicht eine Demontage erfolgen kann. Diese einfache Montage wird ohne Zusatzteile wie Schrauben oder dergleichen, gewährleistet.

Nach einer weiteren Ausgestaltung der Erfindung ist vorgesehen, das Spulengehäuse so auszubilden, daß wahlweise mit einer Einfadenspule oder einer Zweifadenspule gearbeitet werden kann. Um dies zu ermöglichen, sind an zwei diametral gegenüberliegenden Seiten des Gehäuses Fadenführungsbuchsen vorgesehen, durch die je ein Schneidfaden einer Zweifadenspule nach außen geführt werden kann. Die Zweifadenspule weist zwei durch einen Mittelflansch getrennte Kammern auf. Soll eine Einfadenspule benutzt werden, dann wird zweckmäßigerweise die nichtbenutzte Führungsöse durch ein Ausgleichsgewicht ersetzt, wodurch die Spule ausgewuchtet bleibt. Dieses Ausgleichsgewicht kann gleichzeitig die Fadenspule gegen eindringenden Schmutz abkapseln.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

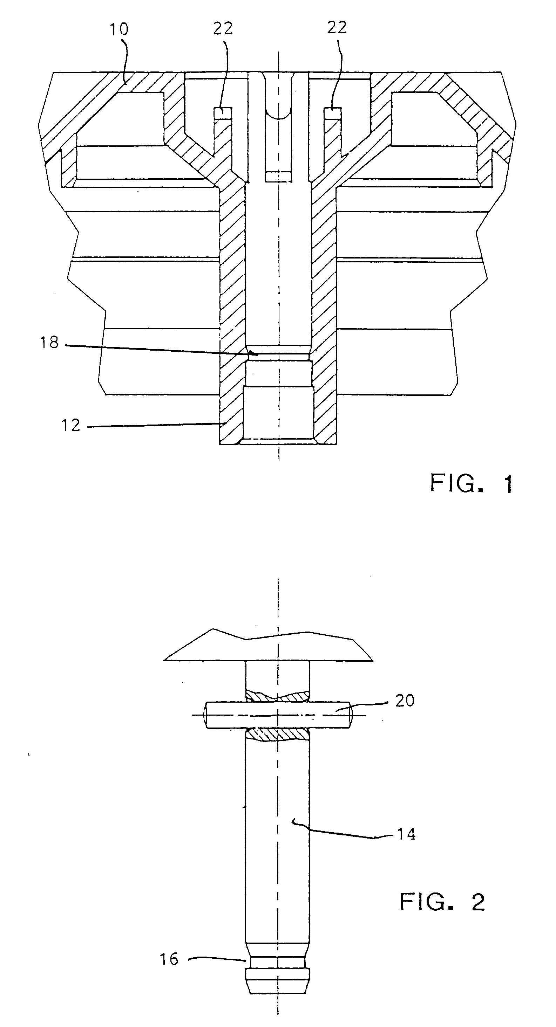

Fig. 1 einen Teilschnitt des Spulengehäuses eines Fadenschneider-Schneidkopfes;
Fig. 2 eine Ansicht der das Spulengehäuse antreibenden Welle des Schneidkopfes;
Fig. 3 eine axiale Ansicht des Spulengehäuses mit eingesetzter Spule für Zweifadentechnik bei abgenommenem Deckel;
Fig. 4 einen Schnitt nach der Linie IV-IV gemäß Fig. 3;
Fig. 5 eine der Fig. 3 entsprechende axiale Ansicht mit einer Fadenspule für Einfadentechnik;
Fig. 6 einen Schnitt nach der Linie VI-VI gemäß Fig. 5.

Das Spulengehäuse 10 weist eine Hohlnabe 12 auf, die auf die Motorwelle 14 axial aufsteckbar ist. Die Welle 14 weist in ihrem Endabschnitt eine Ringnut 16 auf, in die beim axialen Aufstecken des Gehäuses ein Hinterschnitt 18 im Inneren der Hohlnabe 12 einrastet. Die Drehmoment-Übertragung zwischen Welle 14 und Gehäuse 10 erfolgt durch einen Stift 20, der in ein Querloch der Welle 14 eingesteckt ist. Die beiden über die Welle vorstehenden Enden des Stiftes 20 greifen im aufgesteckten Zustand des Gehäuses in je eine Gabel 22 des Spulengehäuses 10 ein, wodurch das Gehäuse von der Welle mitgenommen wird. Nicht dargestellte axiale Führungen können vorhanden sein, die gewährleisten daß die Gabeln 22 beim Aufstecken des Gehäuses den Stift 20 sicher erfassen. Der Stift 20 kann demgemäß auf der Welle vormontiert werden und das Gehäuse braucht nur noch auf die Welle aufgesteckt zu werden, wobei der Hinterschnitt 18 in die Ringnut 16 einrastet. Dies ergibt einen sehr einfachen Montageablauf.

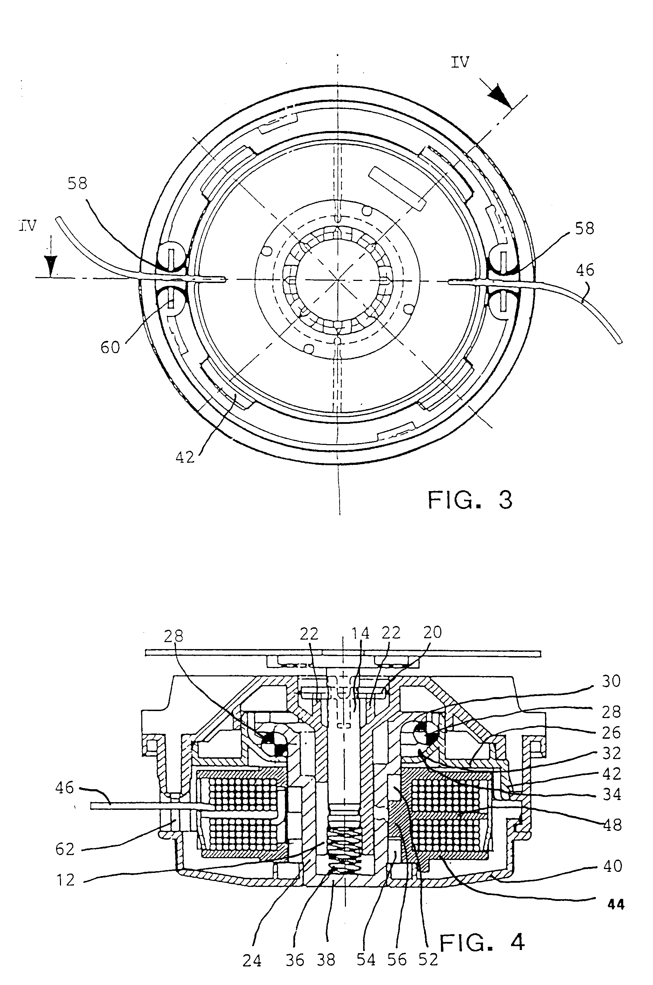

Auf die Hohlnabe 12 des Gehäuses ist eine Rastbuchse 24 aufgesteckt, und diese ist in der aus den Figuren 4 und 6 ersichtlichen Weise von einer Kugelführungsbuchse 26 umschlossen. Zwischen den Laufflächen 30 von Rastbuchse 24 und den Laufflächen 32 der Kugelführungsbuchse laufen Kugeln 28. Diese sind in Umfangsrichtung geführt und können sich aus der Stellung gemäß Figur 4 und 6 links der Drehachse in die Stellung bewegen, die rechts der Drehachse dargestellt ist. Die Bewegung aus der Stellung links der Drehachse in die Stellung rechts der Drehachse erfolgt durch Zentrifugalkraft, wobei die Kugeln auf der Schrägfläche 34 ablaufen und die Rastbuchse 24 anheben. Bei nachlassender Drehzahl kehren die drei Kugeln 28 in die Stellung gemäß Fig. 4 und 6 links der Achse zurück, wodurch auch die Rastbuchse durch die Feder 36 in die Ausgangsstellung zurückgeführt wird. Diese als Druckschraubenfeder ausgebildete Feder 36 wirkt gegen das stirnseitige Ende der Welle 14 und die Stirnwand 38 der Rastbuchse 24. Die Stirnwand 38 steht durch eine Mittelöffnung eines Gehäusedeckels 40 hindurch, der mittels eines Bajonettverschlusses auf das Spulengehäuse 10 aufgesetzt ist. Die Kugelführungsbuchse 26 kann komplett mit Rastbuchse 24, Kugeln 28 und Feder 36 über Verrasthaken 42 in das Spulengehäuse 10 verdrehsicher eingerastet werden, ohne daß eine zusätzliche Befestigung erforderlich wäre.

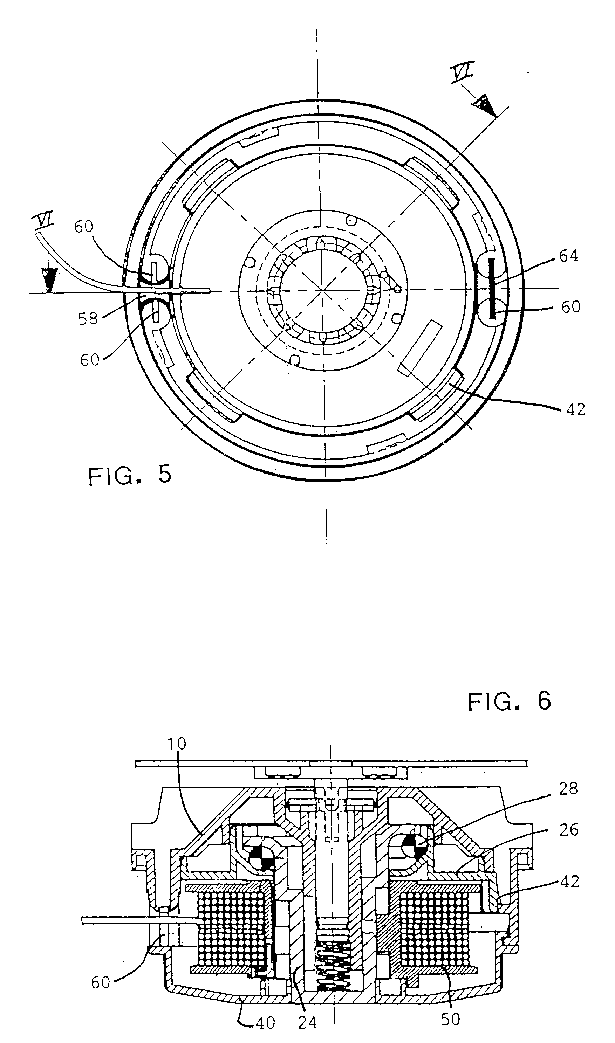

Die Rastbuchse 24 trägt eine Fadenspule, und zwar wahlweise entweder eine Zweifadenspule 44 für die Zweifadentechnik (Fig. 3 und 4), bei der die beiden Fäden 46 auf getrennten, durch einen Mittelflansch 48 getrennten Spulen aufgewickelt sind. Stattdessen kann auch eine Einfadenspule 50 aufgesetzt werden, die nur einen Schneidfaden aufweist (Fig. 5 und 6). Die beiden Fadenspulen 44 und 50 sind, abgesehen von der Spulenanordnung, identisch ausgebildet und austauschbar. Sie werden von der Rastbuchse 24 über obere Rastnocken 52 bzw. untere Rastnocken 54 mitgenommen, die von der Rastbuchse radial nach außen im Winkelabstand vorstehen, wobei die Rastbuchsen 52, 54 winkelmäßig versetzt sind. Diese Rastnocken greifen an inneren Rastnocken 56 an, die von der Spulennabe nach innen vorstehen. In der gemäß Fig. 4 und Fig. 6 links der Drehachse dargestellten Stellung erfolgt eine Kupplung über die oberen Rastnocken 52, und in der Stellung rechts der Drehachse über die unteren Rastnocken 54. Beim Übergang von der links der Drehachse gezeichneten Stellung (Stillstandsstellung) in die Stellung rechts der Achse (Rotationsstellung) wird die Rastbuchse angehoben, wodurch die Kupplung von den Rastnocken 52 auf die winkelmäßig versetzt hierzu angeordneten Rastnocken 54 übergeht, so daß eine Relativdrehung zwischen Rastbuchse und Fadenspule erfolgt und der Faden sich um einen gewissen Betrag abspulen kann, wodurch die Abnutzung ausgeglichen wird. Bei der Rückführung in den Stillstand erfolgt ebenfalls eine Umschaltung der Rastnocken und ein Vorschub des Fadens bzw. der Fäden. Durch wiederholtes An- und Abschalten kann der Faden schrittweise verlängert werden, bis die erforderliche freie Fadenlänge zum Schneiden zur Verfügung steht. Der Faden kann aber auch manuell herausgezogen werden, indem durch Druck auf die Stirnfläche 38 die Rastbuchse 24 soweit angehoben wird, bis eine Entkupplung stattfindet. Dann kann der Faden herausgezogen werden.

Die Funktion der Fadennachstellung entspricht im übrigen der Anordnung wie sie in der DE 34 13 336 C2 beschrieben ist.

Zur Herausführung des von der Spule abgewickelten Schneidfadens 46 weist das Gehäuse an zwei diametral gegenüberliegenden Seiten Fadenführungsösen 58 auf, die der Führung und Schonung des Schneidfadens dienen. Diese Führungsösen 58 sind mit zwei gegenüberliegenden, nach außen vorstehenden Einsatzstegen 60 versehen, die im Gehäuse 14 in Schlitze 62 einschiebbar sind, welche in tangentialer Richtung verlaufen und durch den Deckel 40 abgeschlossen werden. Wie aus Fig. 3 ersichtlich, können bei Verwendung einer Zweifadenspule 44 zwei Führungsösen 58 an zwei diametral gegenüberliegenden Seiten eingesetzt werden. Um bei Verwendung von Einfadenspulen 50 den erforderlichen Massenausgleich zu schaffen, wird in die Gehäuseschlitze 62 auf einer Seite ein Ausgleichsgewicht 64 eingeschoben. Dieses Ausgleichsgewicht 64 schützt gleichzeitig die Fadenbox gegen eindringenden Schmutz.

### Bezugszeichenliste

- 10: Spulengehäuse
- 12: Hohlnabe
- 14: Motorwelle
- 16: Ringnut
- 18: Hinterschnitt
- 20: Stift
- 22: Gabel
- 24: Rastbuchse
- 26: Kugelführungsbuchse
- 28: Kugeln
- 30: Kugelführung
- 32: Kugelführung
- 34: Schrägfläche
- 36: Feder
- 38: Stirnwand
- 40: Deckel
- 42: Verrasthaken
- 44: Zweifadenspule f. Zweifadentechnik
- 46: Schneidfaden
- 48: Mittelflansch
- 50: Einfadenspule
- 52: Rastnocken an Rastbuchse (oben)
- 54: Rastnocken an Rastbuchse (unten)
- 56: Rastnocken
- 58: Führungsösen
- 60: Einsatzsteg
- 62: Gehäuseschlitz
- 64: Ausgleichsgewicht

## Patentansprüche

1. Fadenschneider mit einem Motor und einem von der Motorwelle (14) angetriebenen Schneidkopf, der ein auf die Motorwelle (14) drehfest aufgesetztes Gehäuse (10), einen im Gehäuse (10) angeordneten, mit der Fadenspule (44, 50) kuppelbaren Spulenträger für die Fadenspule, deren Schneidfaden durch eine radiale Führungsöse (58) aus dem Gehäuse herausgeführt ist, und einen abnehmbaren Gehäusedeckel (40) aufweist, durch dessen Mittelöffnung der Spulenträger zwecks Entkupplung der Fadenspule (44, 50) zugänglich ist, wobei die Verbindung einzelner Bauteile durch Verrastung der im wesentlichen aus Kunststoff bestehenden Teile erfolgt,
dadurch gekennzeichnet, daß eine auf die Motorwelle (14) auf steckbare Hohlnabe (12) des Gehäuses (10) einen inneren Hinterschnitt (18) aufweist, der in eine Ringnut (16) der Motorwelle (14) eingreift und daß die Hohlnabe (12) des Gehäuses (10) zwei achsparallel vorstehende Gabeln (22) aufweist, die im zusasmmengesteckten Zustand an einem radial die Motorwelle (14) durchsetzenden Stift (20) angreifen.

2. Fadenschneider nach Anspruch 1,
dadurch gekennzeichnet, daß der als Rastbuchse (24) ausgebildete, die Hohlnabe (12) umschließende Spulenträger durch eine Buchse (26) axial gehaltert ist, die ihrerseits über im Winkelabstand zueinander angeordnete Verrasthaken (42) mit dem Gehäuse (10) verrastet ist.

3. Fadenschneider nach Anspruch 2,
dadurch gekennzeichnet, daß Rastbuchse (24) und Führungsbuchse (26) im Winkelabstand zueinander angeordnete Kugelführungen definieren, und daß die Kugeln unter der Wirkung der Zentrifugalkraft eine Entkupplung und Weiterschaltung der Fadenspule zwecks Abspulung des Schneidfadens (46) bewirken.

4. Fadenschneider nach den Ansprüchen 2 und 3,
dadurch gekennzeichnet, daß ein Gehäusedeckel (40) auf dem Gehäuse (10) mit Bajonettverschluß aufgerastet ist.

5. Fadenschneider nach Anspruch 4,
dadurch gekennzeichnet, daß die durch eine Mittelöffnung des Deckels (40) zugängliche Stirnwand (38) der Rastbuchse durch eine Druckschraubenfeder (36) von innen beaufschlagt ist, die sich auf dem Ende der Motorwelle (14) abstützt.

6. Fadenschneider nach Anspruch 1,
dadurch gekennzeichnet, daß eine Zweifadenspule (44) gegen eine bezüglich ihrer äußeren Abmessungen gleiche Einfadenspule austauschbar auf dem Spulenträger (24) aufsetzbar ist.

7. Fadenschneider nach Anspruch 6,
dadurch gekennzeichnet, daß die Zweifadenspule (44) durch einen mittleren Spulenflansch (48) unterteilt ist.

8. Fadenschneider nach den Ansprüchen 6 und 7,
dadurch gekennzeichnet, daß das Spulengehäuse (10) an zwei diametral gegenüberliegenden Stellen auswechselbare Führungsösen (58) für den Schneidfaden (46) aufweist.

9. Fadenschneider nach Anspruch 8,
dadurch gekennzeichnet, daß jede Führungsöse zwei seitliche Einsatzstege (60) aufweist, die in Gehäuseschlitze (62) einschiebbar und durch den Deckel (40) sicherbar sind.

10. Fadenschneider nach Anspruch 9,
dadurch gekennzeichnet, daß eine der Führungsösen (58) durch ein Ausgleichsgewicht (64) ersetzbar ist, das mit Einsatzstegen (60) in die Gehäuseschlitze (62) einsetzbar und durch den Deckel sicherbar ist.

## Claims

1. Line trimmer having a motor and a trimming head powered by the motor shaft (14), said trimming head having a casing (10) set non-rotationally on the motor shaft (14), a spool carrier for the spool of line which is arranged in the casing (10) and is adapted to be coupled with the spool of line (44, 50), the trimming line of which passes out from the casing through a radial guide eyelet (58), and having a removable casing lid (40) through the central opening of which the spool carrier can be accessed for uncoupling the spool of line (44, 50), the various components being joined by interlocking of the parts, which are essentially made of plastic,
characterised in that a hollow boss (12) adapted to be pushed onto the motor shaft (14) and forming part of the casing (10) incorporates an inner undercut (18) which engages in an annular groove (16) on the motor shaft (14) and that the hollow boss (12) of the casing (10) incorporates two forks (22) which project in an axially parallel manner and which when pushed together operate on a pin (20) which passes radially through the motor shaft (14).

2. Line trimmer according to claim 1,
characterised in that the spool carrier which is in the form of the locking bush (24) and surrounds the hollow boss (12) is retained axially by a bush (26) which in turn is locked to the casing (10) via latching hooks (42) arranged angularly spaced apart from one another.

3. Line trimmer according to claim 2,
characterised in that the locking bush (24) and the guide bush (26) define ball guides arranged angularly spaced apart from one another, and that under the action of centrifugal force the balls produce uncoupling and relaying of the line spool so as to play out the trimming line (46).

4. Line trimmer according to claims 2 and 3,
characterised in that a casing lid (40) is locked on the casing (10) with a bayonet closure.

5. Line trimmer according to claim 4,
characterised in that the end wall (38) of the locking bush, which is accessible through a central opening in the lid (40), is acted upon from the inside by a helical compression spring (36) which rests on the end of the motor shaft (14).

6. Line trimmer according to claim 1,
characterised in that a dual-line spool (44) is adapted to be interchangeably set on the spool carrier (24) in exchange for a single-line spool that is identical in terms of its external dimensions.

7. Line trimmer according to claim 6,
characterised in that the dual-line spool (44) is divided by a central spool flange (48).

8. Line trimmer according to claims 6 and 7,
characterised in that at two diametrically opposed locations the spool casing (10) incorporates interchangeable guide eyelets (58) for the trimming line (46).

9. Line trimmer according to claim 8,
characterised in that each guide eyelet incorporates two lateral insert lands (60) which are adapted to be pushed into casing slots (62) and secured by the lid (40).

10. Line trimmer according to claim 9,
characterised in that one of the guide eyelets (58) can be replaced by a balancing weight (64) which is adapted to be inserted with insert lands (60) into the casing slots (62) and secured by the lid.

## Revendications

1. Coupe-herbe à fil comportant un moteur ainsi qu'une tête de coupe qui est entrainée par l'arbre (14) du moteur et comprend un boîtier (10) monté sur l'arbre (14) du moteur et solidaire en rotation de celui-ci, un porte-bobine pour la bobine de fil qui est disposé à l'intérieur du boîtier (10) et peut être couplé à la bobine de fil (44, 50) dont le fil de coupe est amené à l'extérieur du boîtier au travers d'un oeillet (58) radial de guidage et un couvercle (40) de boîtier démontable dont l'ouverture centrale permet d'accéder au porte-bobine aux fins de libérer le bobine de fil (44, 50), l'assemblage des différents éléments étant réalisé par encliquetage desdits éléments essentiellement en matériau synthétique, caractérisé par le fait qu'un moyeu (12) tubulaire du boîtier (10) qui se glisse sur l'arbre (14) du moteur présente une partie (18) intérieure en contre-dépouille qui pénètre dans une gorge (16) annulaire de l'arbre (14) du moteur et par le fait que le moyeu (12) tubulaire du boîtier (10) comporte deux fourchettes (22) en saillie, parallèles à l'axe, qui en position montée s'engagent sur une goupille (20) qui traverse radialement l'arbre (14) du moteur.

2. Coupe-herbe à fil selon la revendication 1, caractérisé par le fait que le porte-bobine qui entoure le moyeu (12) tubulaire et est agencé sous forme de manchon (24) à griffes est tenu axialement par une bague de guidage (26) qui de son côté est encliquetée sur le boîtier (10) par l'intermédiaire de nez d'encliquetage (42) espacés angulairement.

3. Coupe-herbe à fil selon la revendication 2, caractérisé par le fait que le manchon à griffes (24) et la bague de guidage (26) forment des moyens de guidage de billes mutuellement espacés et par le fait que les billes provoquent sous l'action de la force centrifuge un désaccouplement et une avance de la bobine de fil aux fins de dévider le fil de coupe (46).

4. Coupe-herbe à fil selon les revendications 2 et 3, caractérisé par le fait qu'un couvercle (40) de boîtier est monté sur le boîtier (10) au moyen d'un système de verrouillage à baïonnette.

5. Coupe-herbe à fil selon la revendication 4, caractérisé par le fait que la paroi frontale (38) du manchon à griffes qui est accessible à travers une ouverture centrale du couvercle (40) est sollicitée côté intérieur par un ressort (36) hélicoïdal de compression qui prend appui sur l'extrémité de l'arbre (14) du moteur.

6. Coupe-herbe à fil selon la revendication 1, caractérisé par le fait qu'une bobine (44) à deux fils peut être montée sur le porte-bobine (24) à la place d'une bobine (50) à un fil.

7. Coupe-herbe à fil selon la revendication 6, caractérisé par le fait que la bobine (44) à deux fils est divisée par une joue (48) intermédiaire.

8. Coupe-herbe à fil selon les revendication 6 et 7, caractérisé par le fait que le boîtier (10) de bobine présente en deux endroits diamétralement opposés des oeillets (58) de guidage interchangeables pour le fils de coupe (46).

9. Coupe-herbe à fil selon la revendication 8, caractérisé par le fait que chaque oeillet de guidage comporte deux bords de montage (60) qui s'engagent dans des fentes (62) du boîtier et sont bloqués par le couvercle (40).

10. Coupe-herbe à fil selon la revendication 9, caractérisé par le fait que l'un des oeillets (58) de guidage peut être remplacé par une masse d'équilibrage (64) qui se monte par des bords de montage (60) dans les fentes (62) du boîtier et est bloquée par le couvercle (40).
